# EUROPÄISCHE PATENTSCHRIFT

(11) **EP 0 373 441 B1**
(45) Veröffentlichungstag und Bekanntmachung des Hinweises auf die Patenterteilung: **24.02.1993**
(21) Anmeldenummer: 89122180.6
(22) Anmeldetag: 01.12.1989
(51) Int. Cl.: C08J 9/20, C08J 9/12, C08J 9/228, C08L 25/06, B01F 17/42

(54) **Verfahren zur Herstellung von Styrolpolymerisat-Schaumstoffpartikeln**
Process for preparing styrenic foam particles
Procédé de préparation de particules de mousse styrénique

(30) Priorität: 16.12.1988 DE 3842305
(43) Veröffentlichungstag der Anmeldung: 20.06.1990
(73) Patentinhaber: BASF Aktiengesellschaft, 67063 Ludwigshafen (DE)
(72) Erfinder: Hahn, Klaus, Dr., D-6719 Kirchheim (DE); Guhr, Uwe, Dr., D-6718 Grünstadt (DE); Gellert, Roland, Dr., D-6730 Neustadt (DE); Back, Wolf-Dieter, Dr., D-6730 Neustadt (DE)

(56) Entgegenhaltungen:
- FR-A- 2 235 157
- FR-A- 2 255 319
- US-A- 4 226 942
- US-A- 4 765 934
- CHEMICAL ABSTRACTS, Band 77, Nr. 24, 11. Dezember 1972, Seite 41, Zusammenfassung Nr. 153133k, Columbus, Ohio, US

## Beschreibung

Die Erfindung betrifft die Herstellung von Schaumstoffpartikeln der Dichte 10 bis 30 kg/m³ aus Styrolpolymerisaten nach einem neuen umweltfreundlichen Verfahren unter Verwendung von nur geringen Mengen an organischen Treibmitteln.

Die Herstellung von Schaumstoffpartikeln aus Styrolpolymerisaten ist bekannt. In der Technik geht man von expandierbaren Styrolpolymerisaten aus, die als Treibmittel C₄- bis C₅-Kohlenwasserstoffe enthalten und schäumt diese durch Erhitzen mittels Wasserdampf auf. Die expandierbaren Styrolpolymerisate wenden üblicherweise durch Suspensionspolymerisation von Styrol in Gegenwart des Treibmittels hergestellt. Die Schaumstoffpartikel werden anschließend durch erneutes Erhitzen in einer perforierten druckfesten Form mit Heißdampf weiter aufgeschäumt, wobei sie zu einem Schaumstoff-Formkörper verschweißen.

Der Erfindung liegt die Aufgabe zugrunde, die Menge an organischen Treibmitteln bei der Herstellung von Styrolpolymerisat-Schaumstoffpartikeln zu verringern und dadurch die Umwelt zu entlasten.

Diese Aufgabe wird dadurch gelöst, daß man einen Teil des organischen Treibmittels durch Wasser ersetzt und mittels Mikrowellen aufschäumt.

Gegenstand der Erfindung ist demgemäß ein Verfahren zur Herstellung von Styrolpolymerisat-Schaumstoffteilchen der Dichte 10 bis 30 kg/m³, dadurch gekennzeichnet, daß man Styrolpolymerisat-Partikel, die 0.7 bis 3 Mol/kg eines Treibmittelgemisches aus 60 bis 90 Mol% Wasser, 10 bis 40 Mol% mindestens eines C₄- bis C₅-Kohlenwasserstoffs und ein Netzmittel enthalten, mittels Mikrowellen aufschäumt.

Aus der DE-A 35 32 347 ist die Herstellung von geschäumten Kunststoffen, die Hydroxyl-, Thiol-, Alkylamino-, Amino- oder Carboxylgruppen enthalten, mittels Mikrowellen bekannt. Als Treibmittel werden Fluorchlorkohlenwasserstoffe verwendet.

Aus der GB-PS 922 547 ist die Verschäumung von expandierbaren Styrolpolymerisaten, die 10 Gew.% Toluol-sulfonamide oder Tetrachlorbiphenyl enthalten, und von chloriertem Polystyrol mit einem Chlorgehalt von 25 % mittels Mikrowellen bekannt. Als Treibmittel wird Petrolether verwendet.

Aus der US-A 4,765,934 ist es bekannt, expandierbare Perlen aus synthetischen thermoplastischen Polymeren wie beispielsweise Polystyrol in 25 bis 75 Gew.%, bezogen auf die thermoplastischen Polymerperlen, einer wässrigen Lösung eines wasserlöslichen Salzes dadurch zum Aufschäumen und Verschweißen unter Bildung einer Schaumstruktur zu bringen, daß die wässrige Lösung unter Anwendung von Mikrowellenenergie zum Sieden gebracht wird.

Expandierbare Styrolpolymerisate, in denen das organische Treibmittel ganz oder teilweise durch Wasser ersetzt ist, zeigen beim üblichen Verschäumen mittels Wasserdampf oder Heißluft ein völlig unbefriedigendes Schäumverhalten. Überraschenderweise wird beim Verschäumen mittels Mikrowellen eine wesentlich niedrigere Dichte erzielt. Dies ist für den Fachmann völlig überraschend, da bei alleiniger Verwendung von organischen Treibmitteln die Verschäumung mittels Dampf, Heißluft und Mikrowellen jeweils Schaumstoffpartikel annähernd gleicher Dichte ergibt.

Styrolpolymerisate im Sinne der Erfindung sind Polystyrol und Mischpolymerisate des Styrols mit anderen α,β-olefinisch ungesättigten Verbindungen, die mindestens 50 Gew.-Teile Styrol einpolymerisiert enthalten. Als Mischpolymerisationskomponenten kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat. Geeignet sind auch Mischpolymerisate und Pfropfpolymerisate von 40 bis 90 Gew.% Polystyrol und 10 bis 60 Gew.% Polyethylen bzw. Polypropylen.

Die Styrolpolymerisate enthalten 0,7 bis 3 Mol/kg eines Treibmittelgemisches aus 60 bis 90 Mol% Wasser, das in feinst verteilter Form und 10 bis 40 Mol% eines C₄- bis C₅-Kohlenwasserstoffs, wie Butan, n-Pentan, iso-Pentan und/oder Neopentan, der in gelöster Form vorliegt. Im allgemeinen verwendet man dabei zwischen 1 und 3 Gew.% Wasser und zwischen 1 und 3,5 Gew.% Pentan als Treibmittel. Die Dispergierung des Wassers im Styrolpolymerisat wird durch die Mitverwendung von äußerst geringen Mengen eines üblichen Netzmittels bewirkt. Geeignet sind beispielsweise ethoxylierte Talgfettalkohole. Das Netzmittel bewirkt, daß bei der Lagerung des expandierbaren Styrolpolymerisats das darin enthaltene Wasser nicht ausschwitzt. Es wird im allgemeinen in Mengen von 0,001 bis 0,1 Gew.% bezogen auf das Styrolpolymerisat verwendet.

Die expandierbaren Styrolpolymerisat-Partikel können in Perlform, in Form zylindrischer Granulate oder in Form von Brocken vorliegen. Die Teilchen haben vorteilhaft einen Durchmesser von 0,1 bis 6 mm, insbesondere 0,4 bis 3 mm. Sie können als weitere Zusatzstoffe übliche Farbstoffe, Füllstoffe, Stabilisatoren, Flammschutzmittel und Synergisten in üblichen Mengen enthalten.

Ihre Herstellung erfolgt nach üblichen Verfahren, vorteilhaft durch Suspensionspolymerisation des Styrols in wäßriger Phase in Gegenwart des Treibmittels und Netzmittels. Die Perlen werden nach beendeter Polymerisation von der wäßrigen Phase abgetrennt, gewaschen und durch kurzfristiges Trocknen von anhaftendem Außenwasser befreit.

Zur Herstellung der Schaumstoffpartikel werden die expandierbaren Styrolpolymerisatpartikel mittels Mikrowellen aufgeschäumt. Das im Inneren der Perlen feinst dispergiert vorliegende Wasser absorbiert die Mikrowellenstrahlung, verdampft dabei und bringt unter gleichzeitigem Verdampfen des Kohlenwasserstoffs und Erweichen des Styrolpolymerisats die Perlen zum Aufschäumen. Die erhaltenen Schaumstoffpartikel besitzen eine Dichte von 10 bis 30 kg/m³. Nach dem Ablagern können sie mittels Wasserdampf oder Heißluft noch weiter aufgeschäumt und in druckfesten perforierten Formen in bekannter Weise zu Schaumstoff-Formkörpern verschweißt werden.

Die in den Beispielen genannten Teile sind Gewichtsteile.

### Beispiele 1 bis 6

In einem druckfesten Rührkessel wurde eine Mischung aus 150 Teilen Wasser, 0,1 Teilen Natriumpyrophosphat, 100 Teilen Styrol, Pentan und Netzmittel (ethoxylierter Talgfettalkohol) in unterschiedlichen Gewichtsmengen, jeweils bezogen auf Styrol, 0,15 Teilen tert.-Butylperbenzoat und 0,45 Teilen Benzoylperoxid unter Rühren auf 90°C erhitzt. Nach 2 Stunden bei 90°C wurden als Suspensionsstabilisator 4 Teile einer 10 %igen wäßrigen Lösung von Polyvinylpyrrolidon zugefügt und die Mischung weitere 2 Stunden bei 90°C, anschließend 2 Stunden bei 100°C und schließlich 2 Stunden bei 120°C gerührt.

Das erhaltene Polymerisat in Perlform mit einem mittleren Teilchendurchmesser von ca. 1 mm wurde von der wäßrigen Phase abgetrennt, gewaschen und durch kurzzeitiges Trocknen mit Luft von 40 bis 70°C vom anhaftenden Oberflächenwasser befreit und der Wassergehalt (Innenwasser) der Perlen bestimmt.

Die Perlen werden dann in einem handelsüblichen Mikrowellenherd (Leistung 650 W) 6 Minuten lang mit Mikrowellen bestrahlt, wobei sie aufschäumen. Zum Vergleich wurden die Perlen 6 Minuten mit strömendem Wasserdampf aufgeschäumt. Die Ergebnisse sind in der Tabelle zusammengefaßt.

**Tabelle**

| Beispiel | Pentan Gew.% | Netzmittel Gew.% | Innenwasser Gew.% | Dichte nach dem Verschäumen [kg/m³] | |
|---|---|---|---|---|---|
| | | | | mit Mikrowellen | mit strömendem Wasserdampf |
| 1 (Vergleich) | - | 0,005 | 0,5 | 415 | 800 |
| 2 (Vergleich) | - | 0,010 | 2,1 | 350 | 790 |
| 3 | 2,3 | 0,020 | 2,4 | 29 | 130 |
| 4 | 3,2 | 0,010 | 2,3 | 15 | 90 |
| 5 (Vergleich) | 2,3 | - | < 0,1 | 200 | 135 |
| 6 (Vergleich) | 3,2 | - | < 0,1 | 150 | 92 |

## Patentansprüche

1. Verfahren zur Herstellung von Styrolpolymerisat-Schaumstoffpartikeln der Dichte 10 bis 30 kg/m³, dadurch gekennzeichnet, daß man Styrolpolymerisat-Partikel, die 0,7 bis 3 Mol/kg eines Treibmittelgemisches aus 60 bis 90 Mol% Wasser, 10 bis 40 Mol% mindestens eines C₄- bis C₅-Kohlenwasserstoffs und ein Netzmittel enthalten, mittels Mikrowellen aufschäumt.

2. Verfahren nach Anspruch 1, dadurch gekennzeichnet, daß die Styrolpolymerisat-Partikel 0,001 bis 0,1 Gew.% eines Netzmittels enthalten.

## Claims

1. A process for preparing styrene polymer foam particles from 10 to 30 kg/m³ in density, which comprises expanding styrene polymer particles which, per kg, contain from 0.7 to 3 moles of a blowing agent mixture composed of 60 to 90 mol % of water, 10 to 40 mol % of at least one C₄- or C₅-hydrocarbon and a wetting agent with the aid of microwaves.

2. A process as claimed in claim 1, wherein the styrene polymer particles contain from 0.001 to 0.1 % by weight of a wetting agent.

## Revendications

1. Procédé de préparation de particules alvéolaires de polymérisat de styrène d'une densité de 10 à 30 kg/m³, caractérisé par le fait que des particules de polymérisat de styrène contenant 0,7 à 3 moles/kg d'un mélange de gonflants de 60 à 90 % (moles) d'eau, 10 à 40 % (moles) d'au moins un hydrocarbure en C4 à C5 et d'un agent mouillant sont soumises à l'expansion au moyen de micro-ondes.

2. Procédé selon la revendication 1, caractérisé par le fait que les particules de polymérisat de styrène contiennent 0,0001 à 0,1 % en poids d'un agent mouillant.
